# EUROPÄISCHE PATENTANMELDUNG

(11) **EP 0 919 473 A1**
(43) Veröffentlichungstag der Anmeldung: **02.06.1999**
(21) Anmeldenummer: 98121437.2
(22) Anmeldetag: 11.11.1998
(51) Int. Cl.: B65B 51/04, F16H 53/06

(54) **Vorrichtung zum Verschliessen von schlauch- oder beutelförmigen Verpackungshüllen**

(30) Priorität: 30.11.1997 DE 19753000
(71) Anmelder: Poly-clip System GmbH & Co. KG, 60489 Frankfurt am Main (DE)
(72) Erfinder: Ebert, Detlef, 61231 Bad Neuheim (DE); Wissel, Klaus, 63755 Alzenau (DE)
(74) Vertreter: Fischer, Ernst, Dr.

(57) **Zusammenfassung**

Die Erfindung besteht in einer Vorrichtung zum Verschließen von schlauch- oder beutelförmigen Verpackungshüllen mit Werkzeugen wie Verdrängerscheren zum Einschnüren der Verpackungshülle sowie einem Stempel (10) und einer Matrize (12) zum Setzen und Schließen von Verschlußklammern (46), von denen die Bewegung eines oder mehrerer Werkzeuge durch mindestens eine Kurvenbahn vorgegeben ist, auf der eine Abtastrolle (22; 32) abrollt, und die sich dadurch auszeichnet, daß sie zusätzlich eine Führungsrolle aufweist, die auf einer eigenen Führungsbahn auf der Kurvenscheibe abrollt und mittels eines elastischen Elementes (61) die Abtastrolle (32) aufgrund elastischer Verformung des elastischen Elementes (61) mit einer Vorspannung gegen die Kurvenbahn drückt.

## Beschreibung

Die Erfindung betrifft eine Vorrichtung zum Verschließen von schlauch- oder beutelförmigen Verpackungshüllen mit Werkzeugen wie Verdrängerscheren zum Einschnüren der Verpackungshülle sowie einem Stempel und einer Matrize zum Setzen und Schließen von Verschlußklammern, von denen die Bewegung eines oder mehrerer Werkzeuge durch mindestens eine Kurvenbahn vorgegeben ist, auf der eine Abtastrolle abrollt.

Bei bekannten Vorrichtungen der genannten Art ist in der Regel jedem der genannten Werkzeuge, d.h. den beiden Verdrängerscheren sowie dem Stempel und der Matrize, eine eigene Kurvenbahn zugeordnet, durch die die Bewegung dieser Werkzeuge einzeln vorgegeben ist. Jeweils eine Kurvenbahn befindet sich dabei auf einer Kurvenscheibe und wird beispielsweise von der Außenflanke oder der Innenflanke der Nut in dieser Kurvenscheibe gebildet. In die Nut greift eine Abtastrolle ein, die auf der Innen- oder Außenflanke der Nut abrollen kann und über einen Hebelmechanismus mit dem jeweiligen Werkzeug verbunden ist. Wenn die Kurvenscheibe in Drehung versetzt wird, tastet die Abtastrolle die Kurvenbahn auf der Kurvenscheibe ab und treibt über den jeweiligen Hebelmechanismus das ihr zugeordnete Werkzeug an. Die Bewegung des Werkzeugs ist dabei durch die Form der Kurvenbahn auf der Kurvenscheibe vorgegeben.

Generell ist der Bewegungsablauf der eingangs genannten Werkzeuge dergestalt, daß eine befüllte Verpackungshülle zunächst von zwei Verdrängerscheren engeschnürt wird. Dadurch entsteht ein kurzer füllgutfreier Verpackungshüllenzopf. Dieser Verpackungshüllenzopf wird anschließend durch Spreizen der Verdrängerscheren verlängert, und daraufhin durch Setzen und Schließen zweier Verschlußklammern verschlossen. Das Setzen und Schließen der Verschlußklammern geschieht mit Hilfe eines Stempels und einer Matrize, die nach dem Erzeugen und Verlängern des füllgutfreien Zopfes scherenartig aufeinander zu bewegt werden und dabei den Zopf in ihre Mitte nehmen. Die zunächst offenen U-förmigen Verschlußklammern werden dabei von der Matrize an den Zopf herangeführt und um den Zopf herumgebogen, sobald der Stempel von der anderen Seite auf die freien Schenkelenden der U-förmigen Verschlußklammern trifft. Nachdem die Verpackungshülle auf diese Weise verschlossen wurde, werden sowohl die Verdrängerscheren wieder geöffnet als auch Stempel und Matrize wieder voneinander weg in ihre Ausgangslage zurückbewegt. Der gesamte Bewegungszyklus von Verdrängerscheren sowie Stempel und Matrize wird dabei von den Kurvenbahnen auf den motorisch angetriebenen Kurvenscheiben gesteuert.

Ist die Abtastrolle in der Nut einer Kurvenscheibe geführt, liegt sie während des Bewegungszyklusses eines der Werkzeuge zeitweise an der inneren Nutflanke und zeitweise an der äußeren Nutflanke an und erfährt beim Flankenwechsel jeweils eine Drehrichtungsumkehr. Da regelmäßig eine hohe Taktzahl, d.h. die Produktion einer möglichst großen Anzahl verschlossener Verpackungen pro Zeiteinheit, angestrebt wird, sind auch die Drehzahl der Kurvenscheiben sowie die Beschleunigungen, die die Abtastrolle dabei erfährt, relativ hoch. Hinzu kommt, daß die zum Verschließen der Verschlußklammern erforderliche Kraft ebenfalls über die Kurvenbahnen in den entsprechenden Kurvenscheiben für Stempel und Matrize übertragen wird. Die Kraftspitzen beim Verschließen der Verschlußklammern sowie bei der mit entsprechenden Beschleunigungen verbundenen Bewegungsumkehr der Werkzeuge führen zu einem Verschleiß der Kurvenbahn.

Um diesen Verschleiß zu vermindern, wird in dem deutschen Gebrauchsmuster 296 13 336 U1 vorgeschlagen, die Werkzeuge durch jeweils einen Doppelrollenhebel und eine Kurvenscheibe anzutreiben, bei denen jede der beiden Rollen auf nur einer ihr zugehörigen Flanke der Kurvenscheibe abläuft. Auf diese Weise soll der verschleißfördernde Drehsinnwechsel der Rollen vermieden werden, der auftritt, wenn eine nutgeführte Abtastrolle bei der Bewegungsumkehr der Werkzeuge von der inneren Nutflanke auf die äußere Nutflanke oder umgekehrt wechselt. Trotzdem ist auch eine solche Anordnung mit zwei Kurvenrollen einem gewissen Verschleiß beispielsweise durch die Kraftspitzen beim Beschleunigen der Werkzeuge oder beim Verschließen der Verschlußklammern ausgesetzt. Hinzu kommt, daß zwischen beiden Kurvenrollen und den Kurvenbahnen ein Spiel von 0,1 bis 0,2 mm eingehalten werden muß, damit die Anordnung nicht klemmt, sondern sich frei drehen kann. Dieses Spiel wird durch den von Kraftspitzen verursachten Verschleiß noch vergrößert. Das bedeutet, daß die Kurvenrollen die ihr zugeordnete Kurvenbahn beim Bewegungsrichtungswechsel der Werkzeuge für einen kurzen Augenblick nicht berühren und zum Stillstand kommen, um kurz darauf wieder schlagartig beschleunigt zu werden. An dieser Beschleunigungsstelle tritt zusätzlicher Verschleiß auf.

Die DE-AS 20 37 689 zeigt einen Kurvenscheibenantrieb, dessen Kurvenscheibe außen von einer Tastrolle abgetastet wird. Tastrolle wird von einer Feder auf die Kurvenscheibe gedrückt. Bei einer derartigen Anordnung besteht jedoch die Gefahr, daß die Tastrolle bei großen Drehzahlen von der Kurvenscheibe abhebt, da die Federkraft nicht ausreicht, die Tastrolle samt der mit ihr verbundenen Hebel ausreichend zu beschleunigen, um der Kurvenscheibe zu folgen. Einer Vergrößerung der Federkraft steht jedoch entgegen, daß die Federkraft vom Antrieb der Kurvenscheibe überwunden werden muß. Außerdem verursacht die Federkraft zusätzlichen Verschleiß an der Kurvenscheibe und der Tastrolle.

Der Erfindung liegt die Aufgabe zugrunde, eine Verschließvorrichtung mit möglichst verschleißfreiem Werkzeugantrieb anzugeben, die die Nachteile des Standes der Technik so weit wie möglich vermeidet.

Diese Aufgabe wird erfindungsgemäß durch eine Vorrichtung der eingangs genannten Art gelöst, die zusätzlich eine Führungsrolle aufweist, die auf einer eigenen Führungsbahn auf der Kurvenscheibe abrollt und mittels jeweils eines elastischen Elementes die Abtastrolle aufgrund elastischer Verformung des elastischen Elementes mit einer Vorspannung gegen die Kurvenbahn drückt.

Bei einer derartigen Anordnung läuft die Abtastrolle immer auf einer Kurvenbahn ab. Es kommt also zu keiner Drehrichtungsumkehr bei der Abtastrolle. Da die Abtastrolle ständig auf die Kurvenbahn gedrückt wird, kommt es auch zu keinem Abheben der Abtastrolle von der Kurvenbahn mit dem damit verbundenen Verschleiß. Schließlich wird jeglicher Verschleiß durch das elastische Element automatisch -ausgeglichen.

Bevorzugt wird eine Vorrichtung, deren Führungsrolle bezüglich der Abtastrolle ortsfest angeordnet ist und einen elastisch komprimierbaren Laufmantel hat, der das elastische Element bildet. Der Laufmantel besteht dabei vorzugsweise aus elastischem Kunststoff mit einer Härte von 60 bis 90 shore. Bei der letztgenannten Ausführungsform wird die zum Bewegen bzw. Beschleunigen des Werkzeugs benötigte Kraft in einer Bewegungsrichtung des Werkzeugs von der Kurvenbahn über die Abtastrolle auf das Werkzeug übertragen und bei der entgegengesetzten Bewegungsrichtung des Werkzeugs von der Führungsbahn über die Führungsrolle auf das Werkzeug übertragen. Bei der erstgenannten Ausführungsform wird die zum Bewegen des Werkzeugs benötigte Kraft zwar in einer Bewegungsrichtung des Werkzeugs ebenfalls von der Kurvenbahn über die Abtastrolle auf das Werkzeug übertragen, kann bei der entgegengesetzten Bewegungsrichtung aber auch ausschließlich von dem elastischen Element aufgebracht werden, das die Abtastrolle auf die Kurvenbahn drückt. In jedem Falle werden Vor- und Rückbewegung der Werkzeuge von der jeweiligen Kurvenbahn und Abtastrolle gesteuert.

Bei einer Vorrichtung mit zumindest einer drehbaren Kurvenscheibe, in die zumindest eine Nut eingefräst ist, deren eine Nutflanke die Kurvenbahn bildet, bildet die gegenüberliegende Nutflanke vorzugsweise die Führungsbahn, und Führungsrolle und Abtastrolle sind vorzugsweise mit parallel zueinander versetzten Rotationsachsen auf einem gemeinsamen Achsschenkel so angeordnet, daß die Führungsrolle unter Vorspannung auf der Führungsbahn abrollt und dabei die Abtastrolle auf die Kurvenbahn drückt. Eine solche Vorrichtung läßt sich leicht und je nach Nuttiefe auch durch Modifikation bereits bestehender Verschließmaschinen verwirklichen und bietet dabei all die vorgenannten Vorteile.

Der Versatz der Rotationsachse der Führungsrolle gegenüber derjenigen der Abtastrolle ist vorzugsweise so bemessen, daß die Gegenbahn den Laufmantel der Führungsrolle 0,5 bis 1 mm eindrückt, wenn die Abtastrolle auf der Kurvenbahn aufliegt. Entscheidend ist dabei im wesentlichen der Versatz der beiden Rotationsachsen in einer bezüglich der Kurvenscheibe radialen Richtung, da die Nutflanken der Nut in der Kurvenscheibe im wesentlichen tangential verlaufen, zumindest aber nie radial. Durch den entsprechenden Versatz der Rotationsachsen zueinander ist sichergestellt, daß Abtast- und Führungsrolle immer unter Vorspannung auf ihren Bahnen abrollen und ein Verschleiß bis zu 0,5 mm ohne Nachstellen des Versatzes von dem elastischen Laufmantel der Führungsrolle automatisch ausgeglichen wird.

Die Führungsrolle ist vorzugsweise mittels eines Exzenters an dem Achsschenkel angebracht. Die Richtung, in der die Rotationsachsen der Abtastrolle und der Führungsrolle parallel zueinander versetzt sind, ist vorzugsweise durch Verdrehen des Exzenters bezüglich des Achsschenkel einstellbar. Wenn der Exenter beispielsweise als Exenter-Fortsatz des Achsschenkels fest mit dem Achsschenkel verbunden ist, kann die Einstellung durch Verdrehen des Achsschenkels erfolgen. Auf diese Weise läßt sich der Abstand, den die Rotationsachsen der Abtastrolle und der Führungsrolle in bezüglich der Kurvenscheibe radialer Richtung voneinander haben, leicht einstellen, so daß auch die Vorspannung von Führungs- bzw. Abtastrolle durch einfaches Verdrehen des Exzenters einstellbar ist.

Die Erfindung soll nun anhand eines Ausführungsbeispiels und der Zeichnungen näher erläutert werden. Deren Figuren zeigen:
- Fig. 1: in schematischer Darstellung eine Seitenansicht des Antriebs von Stempel und Matrize einer Verschließmaschine; und
- Fig. 2: im in Fig. 1 gekennzeichneten Schnitt A-A die Anordnung einer Abtastrolle und einer Führungsrolle in der Nut einer Kurvenscheibe.

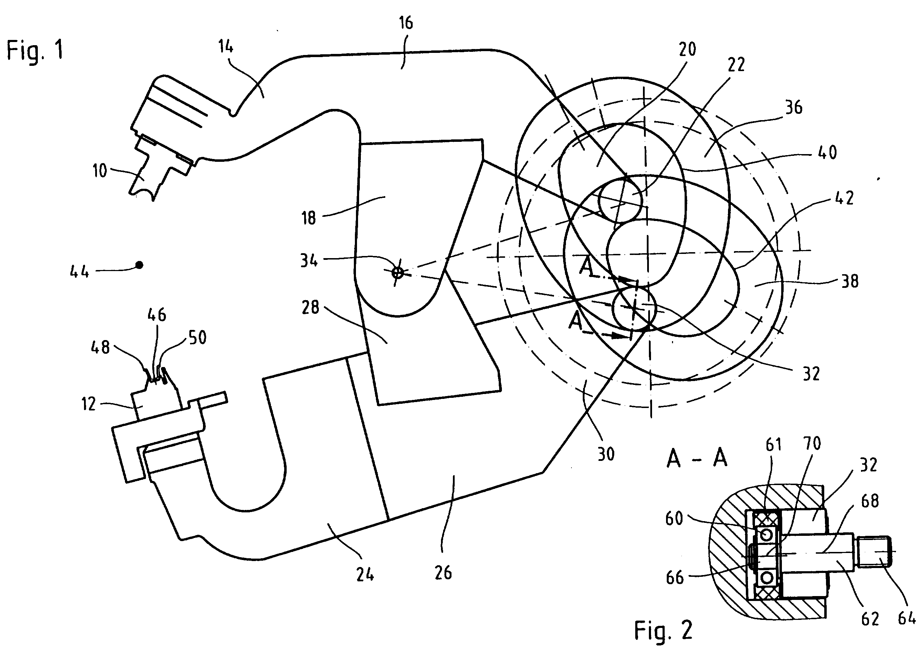

Fig. 1 zeigt zwei Werkzeuge einer Verschließmaschine, nämlich den Stempel 10 und die Matrize 12. Der Stempel 10 ist am vorderen Schenkel 14 eines dreischenkligen oberen Hebels 16 befestigt. Der obere Hebel 16 ist an seinem mittleren Schenkel 18 drehbar gelagert und am freien Ende des hinteren Schenkels 20 mit einer oberen Abtastrolle 22 versehen.

Die Matrize 12 ist am Werkzeugschenkel 24 eines dreischenkligen, unteren Hebels 26 befestigt. Der untere Hebel 26 ist an seinem mittleren Lagerschenkel 28 schwenkbar gelagert und weist am freien Ende seines dritten Schenkels 30 eine untere Abtastrolle 32 auf. Der obere Hebel 16 und der untere Hebel 26 sind beide auf der gleichen Drehachse 34 schwenkbar gelagert.

Ausgelöst und gesteuert wird die Schwenkbewegung beider Hebel 16 und 26 über jeweils eine Nut 36 bzw. 38 in einer nicht weiter dargestellten Kurvenscheibe. Die Innenflanken 40 und 42 der Nut bilden dabei Kurvenbahnen zum Auslösen und Steuern der Bewegung des oberen Hebels 16 bzw. des unteren Hebels 26. Dazu greifen die obere Abtastrolle 22 und die untere Abtastrolle 32 in die jeweils ihnen zugeordnete Nut 36 bzw. 38 ein und rollen auf deren Innenflanken 40 und 42 ab, sobald die Kurvenscheibe von einem ebenfalls nicht dargestellten Motor in Drehung versetzt wird.

Aufgrund der Form der Kurvenbahnen werden die Schenkel 20 und 30 des oberen Hebels 16 bzw. des unteren Hebels 26 beispielsweise ausgehend von der in Fig. 1 dargestellten Position nach oben bzw. unten gedrückt, wodurch beide Hebel 16 und 26 um die Drehachse 34 geschwenkt werden, mit dem Ergebnis, daß sich die an den freien Enden der Schenkel 14 und 24 befindlichen Werkzeuge, nämlich der Stempel 10 und die Matrize 12, scherenartig näherkommen. Sie nähern sich dabei von oben bzw. unten an einen Zopf 44 einer Verpackungshülle an, der mit einer Verschlußklammer 46 verschlossen werden soll. Die zunächst offene, U-förmige Verschlußklammer 46 wird während der Annäherung der Matrize 12 und des Stempels 10 an den Zopf 44 von der Matrize 12 gehalten. Der Stempel 10 und die Matrize 12 bewegen sich so auf den Zopf 44 zu, daß zwei freie Schenkel 48 und 50 der Verschlußklammer 46 den Zopf 44 in ihre Mitte nehmen. Sobald der Stempel 10 im weiteren Verlauf der Bewegung von Stempel 10 und Matrize 12 die freien Enden der Schenkel 48 und 50 der Verschlußklammer 46 berührt, biegt er diese um den Zopf 44 herum und verschließt den Zopf auf diese Weise mit der Verschlußklammer 46.

Beim Verschließen der Verschlußklammer 46 erreichen der Stempel 10 und die Matrize 12 einen Punkt größter gegenseitiger Annäherung, von dem an sich ihre Bewegung umkehrt. Stempel 10 und Matrize 12 bewegen sich von da an voneinander weg und zurück in ihre Ausgangslage. Im Rahmen dieses Bewegungszyklus' hat sich auch die Kurvenscheibe einmal um 360° gedreht und jede der Abtastrollen 22 und 32 hat die ihr zugeordnete Kurvenbahn einmal vollständig abgefahren.

Fig. 2 zeigt in einem Querschnitt durch die Nut 36 an der in Fig. 1 mit A-A bezeichneten Stelle, daß in die Nut 36 nicht nur die Abtastrolle 32 eingreift, sondern auch eine Führungsrolle 60, die mit einem elastischen Laufmantel 61 versehen ist. Sowohl die Abtastrolle 32 als auch die Führungsrolle 60 sind gemeinsam an einem Achsschenkel 62 angebracht, der an seinem einen Ende 64 mit dem freien Ende des Führungsschenkels 30 des unteren Hebels 26 verschraubt ist (in Fig. 2 nicht dargestellt). Die Abtastrolle 32 ist konzentrisch auf dem Achsschenkel 62 gelagert, während die Führungsrolle 60 auf einem Exzenter-Lagerzapfen 66 des Achsschenkels 62 gelagert ist, so daß die Rotationsachsen 68 und 70 der Abtastrolle 32 bzw. der Führungsrolle 60 parallel zueinander versetzt verlaufen. Dieser Versatz ist so bemessen, daß die Führungsrolle 60 mit ihrem elastischen Laufmantel 61 unter Vorspannung auf der äußeren Nutflanke der Nut 36 abläuft und dabei die Abtastrolle 32 gegen die innere Nutflanke der Nut 36 preßt. Aufgrund der Vorspannung ist der elastische Laufmantel 61 der Führungsrolle 60 dabei um 0,5 - 1 mm seitlich eingedrückt. Damit ist sichergestellt, daß die Vorspannung auch an solchen Stellen der Nut 36 gegeben ist, die durch Verschleiß etwas ausgeweitet sind.

Die in Fig. 2 abgebildete Anordnung von Abtastrolle 32 und Führungsrolle 60 stellt sicher, daß die Abtastrolle 32 ständig auf der inneren Nutflanke der Nut 36 abrollt, während die Führungsrolle 60 ständig auf der äußeren Nutflanke der Nut 36 abrollt. Die Abtastrolle 32 und die Führungsrolle 60 rotieren dabei in entgegengesetzter Richtung und erhalten ihren Drehsinn während des gesamten Bewegungszyklus' bei. Dadurch wird Verschleiß vermindert.

Die Richtung des Versatzes der beiden Rotationsachsen 68 und 70 kann eingestellt werden. Damit verändert sich auch die Größe des Versatzes der beiden Rotationsachsen in einer bezüglich der Kurvenscheibe radialen Richtung. Dieser Versatz ist, wie bereits zuvor ausgeführt wurde, für die Größe der Vorspannung entscheidend, mit der die Führungsrolle 60 und die Abtastrolle 32 gegen die ihnen jeweils zugeordnete Nutflanke gedrückt werden. Die Vorspannung kann also durch Einstellen der Richtung des Versatzes der beiden Rotationsachsen 68 und 70, d.h. durch Drehen des Achsschenkels 62 eingestellt werden. Ähnlich wie in Fig. 2 für den unteren Hebel 26 dargestellt, ist auch der Antrieb für den oberen Hebel 16 ausgeführt.

## Patentansprüche

1. Vorrichtung zum Verschließen von schlauch- oder beutelförmigen Verpackungshüllen mit Werkzeugen wie Verdrängerscheren zum Einschnüren der Verpackungshülle sowie einem Stempel (10) und einer Matrize (12) zum Setzen und Schließen von Verschlußklammern (46), von denen die Bewegung eines oder mehrerer Werkzeuge durch mindestens eine Kurvenbahn vorgegeben ist, auf der eine Abtastrolle (22; 32) abrollt,
**dadurch gekennzeichnet**, daß die Vorrichtung zusätzlich eine Führungsrolle (60) aufweist, die auf einer eigenen Führungsbahn auf der Kurvenscheibe abrollt und mittels eines elastischen Elementes (61) die Abtastrolle (32) aufgrund elastischer Verformung des elastischen Elementes mit einer Vorspannung gegen die Kurvenbahn drückt.

2. Vorrichtung nach Anspruch 1,
**dadurch gekennzeichnet**, daß die Führungsrolle bezüglich der Abtastrolle ortsfest angeordnet ist und einen elastisch komprimierbaren Laufmantel (61) hat, der das elastische Element bildet.

3. Vorrichtung nach Anspruch 2,
**dadurch gekennzeichnet**, daß der Laufmantel (61) aus elastischem Kunststoff mit einer Härte von 60 bis 90 shore besteht.

4. Vorrichtung nach Anspruch 2 oder 3 mit zumindest einer drehbaren Kurvenscheibe, in die zumindest eine Nut (36; 38) eingelassen ist, deren eine Nutflanke die Kurvenbahn bildet,
**dadurch gekennzeichnet**, daß die der Kurvenbahn gegenüberliegende Nutflanke die Führungsbahn ist und daß die Führungsrolle (60) und die Abtastrolle (22; 32) mit parallel zueinander versetzten Rotationsachsen (68, 70) auf einem gemeinsamen Achsschenkel (62) so angeordnet sind, daß die Führungsrolle (60) unter Vorspannung auf der Führungsbahn abrollt und dabei die Abtastrolle (22; 32) auf die Kurvenbahn drückt.

5. Vorrichtung nach Anspruch 4,
**dadurch gekennzeichnet**, daß der Versatz der Rotationsachse (70) der Führungsrolle (60) gegenüber derjenigen der Abtastrolle (32) in einer bezüglich der Kurvenscheibe radialen Richtung so bemessen ist, daß die Führungsbahn den Laufmantel (61) der Führungsrolle (60) 0,5 bis 1 mm eindrückt, wenn die Abtastrolle (32) auf der Kurvenbahn aufliegt.

6. Vorrichtung nach Anspruch 4 oder 5,
**dadurch gekennzeichnet**, daß die Führungsrolle (60) mittels eines Exzenters (66) an dem Achsschenkel (62) angebracht ist.

7. Vorrichtung nach Anspruch 6,
**dadurch gekennzeichnet**, daß die Richtung, in der die Rotationsachsen (68, 70) der Abtastrolle (32) und der Führungsrolle (60) parallel zueinander versetzt sind, durch Verdrehen des Exzenters bezüglich des Achsschenkels einstellbar ist.
